# EUROPÄISCHE PATENTSCHRIFT

(11) **EP 3 832 047 B1**
(45) Veröffentlichungstag und Bekanntmachung des Hinweises auf die Patenterteilung: **13.07.2022**
(21) Anmeldenummer: 20000409.1
(22) Anmeldetag: 11.11.2020
(51) Int. Cl.: E04D 13/14, F24S 25/61, E04F 11/18

(54) **VERBINDUNGSVORRICHTUNG**
CONNECTING DEVICE
DISPOSITIF DE RACCORDEMENT

(30) Priorität: 18.11.2019 AT 3722019
(43) Veröffentlichungstag der Anmeldung: 09.06.2021
(73) Patentinhaber: SIHGA GmbH, 4694 Ohlsdorf (AT)
(72) Erfinder: Kaiser-Mühlecker, Benedikt, 4531 Kematen an der Krems (AT); Gruber, Johann, 4842 Zell am Pettenfirst (AT); Schauer, Robert, 4655 Vorchdorf (AT)

(56) Entgegenhaltungen:
- EP-A1- 2 662 646
- AT-A4- 513 027
- DE-A1- 3 532 019
- US-A1- 2014 190 090
- US-A1- 2014 353 435
- US-A1- 2019 194 948

## Beschreibung

Die Erfindung betrifft eine Verbindungsvorrichtung für das Fixieren eines Gegenstandes an einem flächigen Gebäudeteil, welcher mit einer dichtenden flexiblen Hüllschicht versehen ist.

Flachdächer wie auch Terrassenflächen mit darunter liegenden Gebäuden werden üblicherweise mit einer wasserdichten Kunststofffolie als dichtende, flexible Hüllschicht gegen das Eindringen von Wasser von oben her abgedichtet. Typischerweise ist das Material der Kunststofffolie EPDM (Ethylen-Propylen-Dien-Kautschuk). Im Fall, dass auf eine derart eingehüllte Gebäudefläche Gegenstände, - wie beispielsweise Steher von einem Geländer - mechanisch fest fixiert werden müssen, besteht eine Herausforderung darin, trotz der mechanisch festen Fixierung die Dichtheit der Verhüllung aufrecht zu erhalten. Im Fall dass auf die Gebäudefläche Schnee fällt und dort auch schmilzt, würden selbst kleinste Undichtheiten in erheblichem Ausmaß zum Eindringen von Nässe in das Gebäude und damit zu Schäden führen.

Die AT 518644 B1 zeigt eine Verbindungsvorrichtung mit deren Hilfe beispielsweise ein Steher eines Geländers mit einstellbarer Neigung an einer horizontalen Bauwerksfläche verankert werden kann. Dazu weist die Verbindungsvorrichtung einen unteren und einen oberen Teil auf, welche neigungseinstellbar miteinander verbunden sind. Der untere Teil ist mittels Schrauben, die durch ihn hindurch verlaufen, an der Bauwerksfläche verankert. Am oberen Teil ist ggf. der Steher des Geländers verankert. Die Verbindungsvorrichtung ist so nicht direkt an Gebäudeaußenflächen anwendbar, welche durch eine flexible dichtende Hüllschicht abgedeckt sind, da die Schrauben die Hüllschicht durchdringen und damit deren Dichtheit zerstört wird, ohne dass durch die Verbindungsvorrichtung die Dichtheit wieder hergestellt wird. Zwischen der Unterseite der Verbindungsvorrichtung und der Hüllschicht eine Silikondichtmasse anzubringen, stellt einigermaßen verlässlich Dichtheit vielleicht für die Dauer von einem Jahr her, keinesfalls aber für zehn oder mehr Jahre.

Die DE 3532019 A1 zeigt schon 1986 eine Befestigungsvorrichtung für das Fixieren einer dichtenden flexiblen Hüllschicht selbst - und nicht für einen weiteren Gegenstand - an einer Gebäudefläche. Der ringförmige Randbereich eines Loches in der Hüllschicht ist zwischen einer oberen und einer unteren Scheibe der Befestigungsvorrichtung dichtend eingeklemmt. Die untere Scheibe ist durch Schrauben, welche in dem durch den ringförmigen Randbereich umfassten Flächenbereich der unteren Scheibe durch diese hindurch in die Gebäudefläche hinein verlaufen, an dieser festgeschraubt. Die obere Scheibe ist durch eine Schraube, welche durch sie hindurch verläuft, und mit einer Mutternbohrung in der unteren Scheibe in Gewindeeingriff ist, an der unteren Schraube festgeschraubt. Die verbleibenden Undichtheiten an den Schraubendurchgangsbohrungen sind durch Dichtmasse und sehr gewissenhaftes Arbeiten zu beheben.

Die US 6526701 B2 zeigt eine Befestigungsvorrichtung für das Fixieren von Gegenständen auf einer geneigten, mit Schindeln oder Platten gedeckten Deckfläche. Die Befestigungsvorrichtung weist zwei plattenartige Elemente auf. Das untere plattenartige Element liegt auf einem Deckelement der Dachfläche auf und Fortsätze davon ragen durch Bohrungen im Deckelement hindurch bis an die feste Dachunterkonstruktion. Das obere plattenartige Element ist mit dem unteren plattenartigen Element unter Zwischenlage einer Folie, welche Schraubendurchgangsbohrungen aufweist, verschraubt. Die Folie ragt seitlich über die plattenartigen Elemente vor und ist an dem vorragenden Bereich mit dem Deckelement der Dachfläche verklebt. Die verbleibenden Undichtheiten an den Schraubendurchgangsbohrungen sind durch Dichtmasse und sehr gewissenhaftes Arbeiten zu beheben.

EP 2 662 646 A1 und US 2019/194948 A1 offenbaren andere Verbindungsvorrichtungen des Stands der Technik.

Von diesem Stand der Technik ausgehend besteht die der Erfindung zu Grunde liegende Aufgabe darin, eine Verbindungsvorrichtung für das Fixieren eines Gegenstandes an einem flächigen Gebäudeteil zu schaffen, wobei der flächige Gebäudeteil auf der Seite der Verbindungsvorrichtung mit einer dichtenden flexiblen Hüllschicht versehen ist. Dabei wird davon ausgegangen, dass die Hüllschicht für Verankerungsschrauben der Verbindungsvorrichtung zu durchbohren ist. Das Wiederherstellen der durch die Verankerungsschrauben unterbrochenen Dichtheit soll gegenüber vorbekannten Bauweisen zuverlässiger und ohne notwendiges handwerkliches Geschick erfolgen können.

Zum Lösen der Aufgabe wird von einer Bauweise mit drei scheibenartigen Teilen - einem unteren, mittlerem und oberem Scheibenteil - ausgegangen und die Aufgabe wird durch eine Verbindungsvorrichtung nach Anspruch 1 gelöst . In montiertem Zustand ist der mittlere Scheibenteil durch Schrauben, welche durch ihn und den unteren Scheibenteil hindurch in den flächigen Gebäudeteil hinein verlaufen, an den unteren Scheibenteil angedrückt, wobei der ringförmige Rand einer Öffnung der Hüllschicht des Gebäudes, durch welche hindurch die Schrauben verlaufen, zwischen dem unteren und dem mittleren Scheibenteil dichtend eingeklemmt ist. Der obere Scheibenteil ist durch eine oder mehrere separate Schrauben an dem mittleren Scheibenteil festgeschraubt und am oberen Scheibenteil ist der letztendlich zu befestigende Teil zu verankern.

An der Berührungsfläche zwischen mittlerem und oberem Scheibenteil sind jene Schraubendurchgangsbohrungen, durch welche hindurch sich jene Schrauben erstrecken, die in den flächigen Gebäudeteil hinein verlaufen, durch Dichtungsnuten mit darin eingelegter elastischer Dichtung vollständig umringt.

Durch das zuletzt genannte Merkmal wird gegenüber den Bauweisen gemäß dem weiter oben besprochenen Stand der Technik erreicht, dass nässeführende Undichtheiten an Schraubendurchgangsbohrungen zuverlässig vermieden werden, ohne dass es dazu eines pastösen Dichtungsmittels, Klebstoffes etc. oder besonderer handwerklicher Sorgfalt bedarf.

Die Erfindung wird einschließlich vorteilhafter Weiterentwicklungen an Hand von Zeichnungen zu einer beispielhaften Ausführung veranschaulicht.
- Fig. 1:: zeigt in seitlicher Schnittansicht eine beispielhafte erfindungsgemäße Verbindungsvorrichtung in montiertem Zustand.
- Fig. 2:: zeigt die Anordnung von Fig. 1 ebenfalls in seitlicher Schnittansicht. Gegenüber Fig. 1 ist die Schnittebene um 45° um eine zur Ebene der Scheibenteile normal stehende Achse gedreht.

Die Zeichnungen zeigen einen flächigen Gebäudeteil 1, welcher durch eine Hüllschicht 2 - bestehend aus einem flächigen, flexiblen Material wie typischerweise einer gummiartigen Folie aus Kunststoff, typischerweise EPDM - abgedeckt ist, sowie eine auf dem flächigen Gebäudeteil 1 angeordnete erfindungsgemäße Verbindungsvorrichtung 3. Typischerweise ist der flächige Gebäudeteil 1 eine im wesentlichen horizontale Außenschicht eines Gebäudes, beispielsweise ein Flachdach oder eine Terrassenfläche.

Als Teile der Verbindungsvorrichtung 3 liegen drei Scheibenteile 4, 5, 6 schichtartig übereinander.

Der untere Scheibenteil 4 liegt mit seiner Unterseite direkt an dem flächigen Gebäudeteil 1 an. Am ringförmigen Randbereich seiner Oberseite liegt die Hüllschicht 2 mit dem ringförmigen Randbereich 7 einer Öffnung der Hüllschicht 2 an.

Der mittlere Scheibenteil 5 liegt von oben her auf dem unteren Scheibenteil 4 und auf dem besagten Randbereich 7 der Hüllschicht 2 auf.

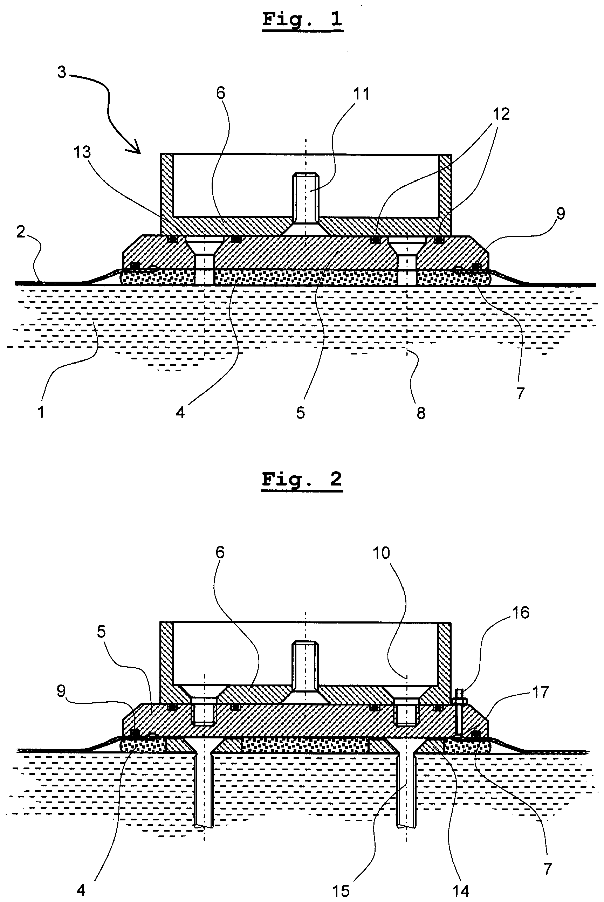

Wie durch Fig. 1 veranschaulicht ist der mittlere Scheibenteil 5 durch Schrauben 8 (nur als strichpunktierte Linie symbolisiert), welche durch ihn selbst und den unteren Scheibenteil 4 hindurch verlaufen und mit einem Mutterngewinde im flächigen Gebäudeteil 1 in Gewindeeingriff sind, in Richtung auf den flächigen Gebäudeteil 1 hin gedrückt, und liegt demzufolge unter Druck auf dem unteren Scheibenteil 4 und auf dem Randbereich 7 auf.

Bevorzugt besteht der mittlere Scheibenteil 5 aus einem Metall, typischerweise Aluminium oder Stahl, und der untere Scheibenteil 4 aus einem Kunststoffmaterial, beispielsweise EPDM, welches gegenüber Metall einen deutlich niedrigeren Elastizitätsmodul hat. Das Material des unteren Scheibenteils 4 wird durch den Druck vom mittleren Scheibenteil 5 etwas elastisch komprimiert und baut dadurch eine gut gleichmäßige und gut definierte Druckspannung auf, durch welche der Randbereich 7 der Hüllschicht 2 zwischen den beiden Scheibenteilen 4, 5 von beiden Seiten her gedrückt wird. Damit ist gut Wasserdichtheit sowohl an der Berührungsfläche zwischen dem unteren Scheibenteil 4 und dem Randbereich 7 der Hüllschicht 2 als auch zwischen dem oberen Scheibenteil 6 und dem Randbereich 7 der Hüllschicht 2 erreichbar.

Um weiter erhöhte Sicherheit für Dichtheit zu erreichen, ist - wie dargestellt - weiter bevorzugt der mittlere Scheibenteil 5 an jenem Flächenbereich seiner Unterseite, welcher bestimmungsgemäß auf dem Randbereich 7 der Hüllschicht 2 zu liegen kommt, mit einer Ringnut versehen, in welche eine Dichtung 9 eingelegt ist, welche mit ihrem aus der Ringnut hervorragenden Querschnittsflächenbereich an den Randbereich 7 der Hüllschicht 2 andrückt. Die Dichtung 9 verläuft dabei ganz ringförmig um die Öffnung in der Hüllschicht 2 herum.

Wie in Fig. 2 erkennbar, ist der obere Scheibenteil 6 durch Schrauben 10 (nur durch strichpunktierte Linien symbolisiert), welche durch ihn selbst hindurch verlaufen und mit einer nur nach oben offenen Mutterngewindebohrung im mittleren Scheibenteil 5 in Gewindeeingriff sind, an den mittleren Scheibenteil 5 angedrückt.

An der Oberseite des oberen Scheibenteils 6 ist bestimmungsgemäß der letztendlich an dem flächigen Gebäudeteil 1 zu befestigende Gegenstand - z.B. ein Steher eines Geländers - zu fixieren. Ggf. kann das unter Anwendung weiterer Zwischenteile erfolgen. Im dargestellten Beispiel dient eine Schraube 11, deren Gewindebolzen vom oberen Scheibenteil 6 aus nach oben ragt, der Verbindung mit einem weiter oben liegenden Gegenstand.

In einer bevorzugten Bauweise ist der obere Scheibenteil 6 der untere Teil einer Verbindungsvorrichtung - wie eingangs an Hand der AT 518644 B1 erwähnt - welche einen unteren und einen oberen Teil (nicht dargestellt) aufweist, welche neigungseinstellbar miteinander verbunden sind und wobei der letztendlich an dem flächigen Gebäudeteil 1 zu verankernde Gegenstand starr mit dem oberen Teil zu verbinden ist.

Von entscheidend wichtiger Bedeutung ist das folgende Merkmal: Jene Teilfläche 13 der Berührungsfläche zwischen mittlerem Scheibenteil 5 und oberem Scheibenteil 6, in welcher jene Schraubendurchgangsbohrungen liegen, durch welche hindurch sich jene Schrauben 8 erstrecken, die durch den mittleren und den unteren Scheibenteil 4, 5 hindurch in den flächigen Gebäudeteil 1 hinein verlaufen, ist durch Dichtungsnuten mit jeweils darin eingelegter Dichtung 12 vollkommen von allen Teilen der besagten Berührungsfläche getrennt, welche direkt oder über Bohrungen mit der Umgebung in Kontakt sind.

Sofern dabei Nuten und zugehörige Dichtungen 12 gemäß den üblichen bekannten Standards für Nuten und zugehörige Dichtungen ausgelegt sind, kann auch dann keine Nässe in den flächigen Gebäudeteil 1 eindringen, wenn die Verbindungsvorrichtung 3 über eine Dauer von Wochen von oben her mit flüssigem Wasser umgeben ist. (Diese Belastung mit Wasser kann dann tatsächlich eintreten, wenn auf dem flächigen Gebäudeteil 1 eine dicke Schneeschicht aufliegt und diese von unten her antaut.)

Zum Fixieren des oberen Scheibenteiles 6 auf der Oberseite des mittleren Scheibenteiles 5 wird der obere Scheibenteil 6 durch Schrauben 10 (Fig. 2), welche durch ihn hindurch in nur nach oben hin offene Sackloch-Gewindebohrungen im mittleren Scheibenteil 5 hinein verlaufen, von oben her an den mittleren Scheibenteil 5 angedrückt bis er satt an diesem aufliegt. Die Dichtungen 12 - typischerweise O-Ringe aus einem Elastomer - ragen in entspanntem Zustand mit ihrer Querschnittsfläche aus der Nut, in welche sie am mittleren Scheibenteil 5 eingelegt sind, hervor. Durch die Anbringung der oberen Scheibe wird ihre Querschnittsfläche etwas gestaucht, sodass die Dichtungen sowohl am unteren als auch am oberen Scheibenteil 5, 6 unter Druck satt dichtend anliegen. Indem die beiden Scheibenteile 5, 6 starre Metallteile sind, die bei der Montage nur zu sattem Anliegen aneinander gebracht werden müssen, um die Dichtungen 12 passend unter Druck zu setzen, ist der Montagevorgang sehr einfach und es bedarf dazu so gut wie keines handwerklichen Geschicks um beständige Dichtheit an den Dichtungen 12 zu erreichen.

Fig. 2 veranschaulicht noch zwei optionale, sehr vorteilhafte Weiterentwicklungen zu dem grundlegenden Erfindungsgedanken:
Der untere Scheibenteil 4 weist Durchbrüche auf, in die jeweils ein Auflageteil 14 eingelegt ist. Der Auflageteil 14 besteht aus einem festeren Material als jenem des unteren Scheibenteiles 4, typischerweise aus Stahl oder auch aus Aluminium. Er weist einen Durchbruch auf, durch welchen hindurch eine Schraube 15 in den flächigen Gebäudeteil 1 hinein geschraubt ist bis sie mit ihrem Schraubenkopf von oben her am Auflageteil 14 aufliegt und der Auflageteil 14 spielfrei am flächigen Gebäudeteil 1 anliegt. Der Auflageteil 14 wirkt damit als Anschlag, durch welchen die Einschraubtiefe der Schraube 15 auf ein bestimmtes Maß hin begrenzt wird.

Wenn in einem späteren Montageschritt der mittlere Scheibenteil 5 von oben her durch die Schrauben 8 (Fig. 1) auf den unteren Scheibenteil 4 zu gedrückt wird, wird die Bewegung des mittleren Scheibenteils 5 nach unten hin dann gestoppt, wenn der mittlere Scheibenteil 5 an der Oberseite der Köpfe der Schrauben 15 anliegt, also an den Köpfen jener Schrauben 15, deren Einschraubtiefe direkt durch die Auflageteile 14 begrenzt ist. Damit wird erreicht, dass die untere Scheibe 4 nicht beliebig stark komprimiert oder in die Oberfläche des flächigen Gebäudeteils 1 hineingedrückt werden kann, sondern unabhängig vom Gefühl der die Montage durchführenden Person recht genau definiert verformt wird. Damit wird die Montage einfacher und weniger anfällig für Fehler und es wird zuverlässig erreichbar, dass die Dichtheit der Anordnung an dem durch die Verbindungsvorrichtung 3 eingeklemmten Randbereich 7 der Hüllschicht 2 für viele Jahre sicher hält.

Als zweite optionale vorteilhafte Weiterentwicklung, welche in Fig. 2 erkennbar ist, weist der mittlere Scheibenteil 5 ein Ventil 16 (also eine wahlweise verschließbare Öffnung) auf, welches von der äußere Umgebung der Verbindungsvorrichtung 3 aus in einen hohlen Raumbereich 17 ragt, welcher zwischen mittlerem Scheibenteil 5 und unterem Scheibenteil 4 und innerhalb der durch die Abdichtung am Randbereich 7 der Hüllschicht 2 gebildeten Umringung liegt und mit der Öffnung der Hüllschicht 2 kommuniziert. Dieser ringförmige Raumbereich 17 kann wie angedeutet durch eine Ringnut an der Unterseite des mittleren Scheibenteils 5 gebildet sein.

Damit kann nach der Montage der Verbindungsvorrichtung 3 mittels einer Pumpe ein Druckunterschied im Raumbereich 17 gegenüber der Umgebung erzeugt werden und mittels eines Dichtprüfungssprays oder durch Messung der Geschwindigkeit des Druckabbaues überprüft werden, ob tatsächlich die gewünschte Dichtheit herrscht.

## Patentansprüche

1. Verbindungsvorrichtung (3) für das Fixieren eines Gegenstandes an einem flächigen Gebäudeteil (1), welcher mit einer dichtenden flexiblen Hüllschicht (2) versehen ist, wobei die Verbindungsvorrichtung (3) einen unteren Scheibenteil (4), einen mittleren Scheibenteil (5) und einen oberen Scheibenteil (6) aufweist, welche in montiertem Zustand übereinander liegen, wobei zwischen mittlerem Scheibenteil (5) und unterem Scheibenteil (4) ein ringförmiger Randbereich (7) einer Öffnung der Hüllschicht (2) einklemmbar ist, wobei durch den mittleren Scheibenteil (5) und den unteren Scheibenteil (4) hindurch und in den Bereich unterhalb des unteren Scheibenteils (4) Schrauben (8) verlaufen, wobei der obere Scheibenteil (6; durch eine oder mehrere weitere Schrauben (10) am mittleren Scheibenteil (5) festgeschraubt ist und am oberen Scheibenteil (6) der letztendlich zu fixierende Gegenstand verankerbar ist,
**dadurch gekennzeichnet, dass**
jene Teilfläche (13) der Berührungsfläche zwischen mittlerem Scheibenteil (5) und oberem Scheibenteil (6), in welcher jene Schraubendurchgangsbohrungen liegen, durch welche hindurch sich jene Schrauben (8) erstrecken, die durch den mittleren und den unteren Scheibenteil (4, 5) hindurch verlaufen, durch Dichtungsnuten mit jeweils darin eingelegter Dichtung (12) vollkommen von allen jenen Teilen der Berührungsfläche zwischen mittlerem Scheibenteil (5) und oberem Scheibenteil (6) getrennt ist, welche direkt oder über Bohrungen mit der Umgebung der Verbindungsvorrichtung (3) oberhalb der unteren Scheibe (4) in Kontakt sind.

2. Verbindungsvorrichtung (3) nach Anspruch 1, **dadurch gekennzeichnet, dass** jener Flächenbereich der Unterseite des Scheibenteils (5), welcher bestimmungsgemäß auf dem Randbereich (7) der Hüllschicht (2) zu liegen kommt, mit einer Ringnut versehen ist, in welche eine Dichtung (9) eingelegt ist.

3. Verbindungsvorrichtung (3) nach Anspruch 1 oder 2, **dadurch gekennzeichnet, dass** der mittlere Scheibenteil (5) aus einem Metall besteht und der untere Scheibenteil (4) aus einem Kunststoffmaterial, welches gegenüber dem Metall einen deutlich niedrigeren Elastizitätsmodul hat.

4. Verbindungsvorrichtung nach Anspruch 3, **dadurch gekennzeichnet, dass** der untere Scheibenteil (4) Durchbrüche aufweist, in welche jeweils ein Auflageteil (14) eingelegt ist und/oder durch welche hindurch jeweils eine Schraube (15) in den Bereich unterhalb des unteren Scheibenteils (4) ragt, und dass der mittlere Scheibenteil (5) entweder auf der Oberseite der Auflageteile (14) oder auf der Oberseite der Köpfe der Schrauben (15) aufliegt.

5. Verbindungsvorrichtung nach Anspruch 4, **dadurch gekennzeichnet, dass** der Kopf der Schraube (15) von oben her am Auflageteil (14) aufliegt, und dass der mittlere Scheibenteil (5) auf der Oberseite der Schrauben (15) aufliegt.

6. Verbindungsvorrichtung nach einem der Ansprüche 1 bis 5, **dadurch gekennzeichnet, dass** der mittlere Scheibenteil (5) ein Ventil (16) aufweist, durch welches die äußere Umgebung der Verbindungsvorrichtung (3) wahlweise mit einem hohlen Raumbereich (17) verbindbar ist, welcher zwischen mittlerem Scheibenteil (5) und unterem Scheibenteil (4) und innerhalb der durch die Abdichtung am Randbereich (7) der Hüllschicht 2 gebildeten Umringung liegt und mit der Öffnung der Hüllschicht (2) kommuniziert.

## Claims

1. Connecting device (3) for fixing an object to a flat building part (1), which is provided with a sealing flexible enveloping layer (2), wherein the connecting device (3) has a lower disc part (4), a middle disc part (5) and an upper disc part (6), which lie one above the other in the assembled state, wherein an annular edge region (7) of an opening in the enveloping layer (2) can be clamped between the middle disc part (5) and the lower disc part (4), wherein screws (8) extend through the middle disc part (5) and the lower disc part (4) and into the region below the lower disc part (4), wherein the upper disc part (6) is screwed firmly to the middle disc part (5) by one or more additional screws (10) and the object to ultimately be fixed can be anchored to the upper disc part (6),
**characterised in that**
that partial surface (13) of the contact surface between the middle disc part (5) and the upper disc part (6), in which those screw through-holes are located through which those screws (8), which extend through the central and the lower disc part (4, 5), extend, is completely separated by sealing grooves, each with a seal (12) inserted respectively therein, from all those parts of the contact surface between the middle disc part (5) and the upper disc part (6) which are in contact, directly or via holes, with the surroundings of the connecting device (3) above the lower disc (4).

2. Connecting device (3) according to claim 1, **characterised in that** the surface region of the underside of the disc part (5) which comes to rest as intended on the edge region (7) of the enveloping layer (2) is provided with an annular groove into which a seal (9) is inserted.

3. Connecting device (3) according to claims 1 or 2, **characterised in that** the middle disc part (5) is composed of a metal and the lower disc part (4) is composed of a plastic material which has a significantly lower modulus of elasticity than the metal.

4. Connecting device according to claim 3, **characterised in that** the lower disc part (4) has apertures into each of which a respective bearing part (14) is inserted and/or through each of which respectively a screw (15) projects into the region below the lower disc part (4), and **in that** the middle disc part (5) rests either on the upper side of the bearing parts (14) or on the upper side of the heads of the screws (15).

5. Connecting device according to claim 4, **characterised in that** the head of the screw (15) rests on the bearing part (14)from above, and **in that** the middle disc part (5) rests on the upper side of the screws (15).

6. Connecting device according to one of the claims 1 to 5, **characterised in that** the middle disc part (5) comprises a valve (16) through which the outer surrounding area of the connecting device (3) can be connected selectively to a hollow spatial region (17) which is located between the middle disc part (5) and the lower disc part (4) and within the annulus formed by the seal at the edge region (7) of the enveloping layer (2) and which communicates with the opening of the enveloping layer (2).

## Revendications

1. Dispositif de jonction (3) pour la fixation d'un objet sur une partie de bâtiment en surface (1), qui est dotée d'une couche de revêtement flexible étanche (2), le dispositif de jonction (3) présentant une partie vitrée inférieure (4), une partie vitrée centrale (5) et une partie vitrée supérieure (6), lesquelles sont superposées à l'état monté, une zone marginale annulaire (7) d'une ouverture de la couche de revêtement (2) pouvant être serrée entre la partie vitrée centrale (5) et la partie vitrée inférieure (4), des boulons (8) passant par la partie vitrée centrale (5) et la partie vitrée inférieure (4) et dans la zone en dessous de la partie vitrée inférieure (4), la partie vitrée supérieure (6) étant vissée sur la partie vitrée centrale (5) par un ou plusieurs autres boulons (10) et pouvant être ancrée sur la partie vitrée supérieure (6) de l'objet qui est enfin à fixer,
**caractérisé en ce que**
cette zone partielle (13) de la surface de contact entre la partie vitrée centrale (5) et la partie vitrée supérieure (6), dans laquelle se trouvent ces trous traversants pour boulons, par lesquels s'étendent ces boulons (8) qui passent par la partie vitrée centrale et la partie vitrée inférieure (4, 5), est entièrement séparée de toutes ces zones de la surface de contact entre la partie vitrée centrale (5) et la partie vitrée supérieure (6) par des rainures pour joints d'étanchéité avec joints (12) insérés, lesquelles sont en contact directement ou par des trous avec l'environnement du dispositif de jonction (3) au-dessus de la vitre inférieure (4) .

2. Dispositif de jonction (3) selon la revendication 1, **caractérisé en ce que** cette zone de surface de la face inférieure de la partie vitrée (5) qui vient reposer sur la zone marginale (7) de la couche de revêtement (2) conformément à l'usage prévu, est dotée d'une rainure annulaire dans laquelle un joint d'étanchéité (9) est inséré.

3. Dispositif de jonction (3) selon la revendication 1 ou 2, **caractérisé en ce que** la partie vitrée centrale (5) se compose d'un métal et la partie vitrée inférieure (4) d'un matériau plastique qui a un module d'élasticité beaucoup plus bas par rapport au métal.

4. Dispositif de jonction selon la revendication 3, **caractérisé en ce que** la partie vitrée inférieure (4) présente des percées dans lesquelles un élément d'appui (14) est inséré et/ou par lesquelles un boulon (15) fait respectivement saillie dans la zone en dessous de la partie vitrée inférieure (4) et **en ce que** la partie vitrée centrale (5) repose sur la face supérieure des éléments d'appui (14) ou sur la face supérieure des têtes de boulons (15).

5. Dispositif de jonction selon la revendication 4, **caractérisé en ce que** la tête de boulon (15) repose depuis le haut sur l'élément d'appui (14) et **en ce que** la partie vitrée centrale (5) repose sur la face supérieure des boulons (15).

6. Dispositif de jonction selon l'une des revendications 1 à 5, **caractérisé en ce que** la partie vitrée centrale (5) présente une valve (16) par laquelle l'environnement extérieur du dispositif de jonction (3) peut être facultativement relié à une zone creuse (17) qui se trouve entre la partie vitrée centrale (5) et la partie vitrée inférieure (4) et à l'intérieur de l'encerclement formé par l'étanchéité sur la zone marginale (7) de la couche de revêtement 2 et qui communique avec l'ouverture de la couche de revêtement (2).
